# EUROPÄISCHE PATENTANMELDUNG

(11) **EP 4 181 356 A1**
(43) Veröffentlichungstag der Anmeldung: **17.05.2023**
(21) Anmeldenummer: 21208428.9
(22) Anmeldetag: 16.11.2021
(51) Int. Cl.: H02K 3/28, B60K 7/00, H02K 29/03, H02K 3/12

(54) **STATOR FÜR EINE ELEKTRISCHE MASCHINE, ANTRIEBSEINRICHTUNG FÜR EIN ELEKTRISCHES FAHRZEUG UND FAHRZEUG**

(71) Anmelder: Valeo eAutomotive Germany GmbH, 91056 Erlangen (DE)
(72) Erfinder: DOTZ, Boris, 97616 Bad Neustadt a.d.Saale (DE); FRITSCH, Daniel, 97616 Bad Neustadt a.d.Saale (DE)
(74) Vertreter: Valeo Powertrain Systems

(57) **Zusammenfassung**

Stator (3) mit einem Statorkern (20), der zwei Stirnseiten (24, 25) aufweist, wobei im Statorkern (20) eine Vielzahl von Nuten (22) ausgebildet ist, wobei eine Statorwicklung (26) mehrere Wicklungszonen (27) in den Nuten (22) belegt, eine Anzahl N Stränge (U, V, W) und eine Anzahl 2·P Pole aufweist und die Anzahl der Nuten (22) 2·P·N·q beträgt mit q ≥ 2, wobei sich jede Wicklungszone (27) über zumindest q+1 der Nuten (22) erstreckt, wobei jede Wicklungszone (27) radial in erste bis L-te Lagen (32a-f) untergliedert ist, wobei die Lagen (32a-f) erste bis (L/2)-te Doppellagen (33a-c) ausbilden, wobei eine Anzahl der Doppellagen (33a-c), die geringer als die Anzahl der übrigen Doppellagen (33a-c) ist, entgegen der vorgegebenen Umfangsrichtung gegenüber den übrigen Doppellagen (33a-c) um wenigstens eine Nut (22) verschoben ist, wobei jede Wicklungszone (27) in Umfangsrichtung in erste bis q-te Teilwicklungszonen (31a, 31b) untergliedert ist, wobei eine jeweilige Phasenwicklung (34u, 34v, 34w) für einen der Stränge (U, V, W) wenigstens eine einen Strompfad ausbildende Teilwicklung (35a, 35b) umfasst, die innerhalb der Nuten (22) angeordnete Innenabschnitte (39, 39a-d) und an den Stirnseiten (24, 25) des Statorkerns (20) angeordnete Verbindungsabschnitte (40, 41), welche jeweils zwei bezüglich des Strompfads unmittelbar aufeinanderfolgende Innenabschnitte (39, 39a-d) elektrisch leitfähig verbinden, umfasst.

## Beschreibung

Die vorliegende Erfindung betrifft einen Stator für eine elektrische Maschine. Daneben betrifft die Erfindung eine Antriebseinrichtung für ein elektrisches Fahrzeug und ein Fahrzeug.

Bei elektrisch angetriebenen Fahrzeugen wird eine möglichst glatte, d. h. möglichst wenig wellige, Drehmomentausgabe gewünscht, um ein gutes NVH-Verhalten (englisch: noise, vibration, harshness) zu erzielen. Dies kann insbesondere durch eine geringe Drehmomentwelligkeit und geringe parasitäre Kräfte in einer elektrischen Maschine der Antriebseinrichtung erzielt werden. Bei einer Statorwicklungen eines Stators der elektrischen Maschine soll eine erforderliche Anzahl von Wicklungen symmetrisch, mit einem geringen Wicklungsüberhang, einfach anschließbar und fertigungsfreundlich im Hinblick auf eine automatisierte Produktion mit hoher Prozesszuverlässigkeit in einem Statorkern des Stators angeordnet werden.

Der Erfindung liegt die Aufgabe zugrunde, eine Möglichkeit zum Antreiben eines Fahrzeugs mit einer geringen Drehmomentwelligkeit anzugeben.

Diese Aufgabe wird erfindungsgemäß gelöst durch einen Stator für eine elektrische Maschine mit einem Statorkern, der sich entlang einer Längsachse erstreckt, eine Stirnseite und der eine der Stirnseite gegenüberliegende weitere Stirnseite aufweist, und mit einer Statorwicklung, wobei im Statorkern eine Vielzahl von in Umfangsrichtung angeordneten Nuten ausgebildet ist, wobei die Statorwicklung mehrere Wicklungszonen in den Nuten belegt, wobei die Statorwicklung eine Anzahl N Stränge und eine Anzahl 2·P Pole aufweist und die Anzahl der Nuten 2·P·N·q beträgt, wobei P, N und q natürliche Zahlen sind und q ≥ 2 ist, wobei sich jede Wicklungszone über zumindest q+1 der Nuten erstreckt, wobei jede Wicklungszone radial in erste bis L-te Lagen untergliedert ist, die nach ihrer Reihenfolge in Radialrichtung benannt sind, wobei die Lagen erste bis (L/2)-te Doppellagen ausbilden, wobei die i-te Doppellage die (2i-1)-te und die (2i)-te Lage für alle 1 ≤ i ≤ (L/2) umfasst, wobei L ≥ 6 und gerade ist, wobei L und i natürliche Zahlen sind, wobei eine Anzahl der Doppellagen, die geringer als die Anzahl der übrigen Doppellagen ist, entgegen der vorgegebenen Umfangsrichtung gegenüber den übrigen Doppellagen um wenigstens eine Nut verschoben ist, wobei jede Wicklungszone in Umfangsrichtung in erste bis q-te Teilwicklungszonen untergliedert ist, die jeweils alle Lagen umfassen und entsprechend ihrer Reihenfolge in Umfangsrichtung benannt sind, wobei die Statorwicklung für einen jeweiligen Strang eine Phasenwicklung aufweist, wobei die Phasenwicklung wenigstens eine einen Strompfad ausbildende Teilwicklung umfasst, die innerhalb der Nuten angeordnete Innenabschnitte und an den Stirnseiten des Statorkerns angeordnete Verbindungsabschnitte, welche jeweils zwei bezüglich des Strompfads unmittelbar aufeinanderfolgende Innenabschnitte elektrisch leitfähig verbinden, umfasst.

Der erfindungsgemäße Stator für eine elektrische Maschine weist einen Statorkern auf. Der Statorkern erstreckt sich entlang einer Längsachse. Der Statorkern weist eine Stirnseite und eine weitere Stirnseite auf. Die weitere Stirnseite liegt der Stirnseite gegenüber. Der Stator weist eine Statorwicklung auf. Im Statorkern ist eine Vielzahl von Nuten ausgebildet. Die Nuten sind in Umfangsrichtung angeordnet. Die Statorwicklung belegt mehrere Wicklungszonen in den Nuten. Die Statorwicklung weist eine Anzahl N Stränge und eine Anzahl 2·P Pole auf. Die Anzahl der Nuten beträgt 2·P·N·q. P, N und q sind natürliche Zahlen. q ist größer als zwei. Jede Wicklungszone erstreckt sich über zumindest q+1 der Nuten. Jede Wicklungszone ist radial in erste bis L-te Lagen untergliedert. L ist größer als sechs und gerade. Die Lagen sind nach ihrer Reihenfolge in Radialrichtung benannt. Die Lagen bilden erste bis (L/2)-te Doppellagen aus. Die i-te Doppellage umfasst die (2i-1)-te und die (2i)-te Lage für alle 1 ≤ i ≤ (L/2). L und i sind natürliche Zahlen. L ist größer als sechs und gerade. Eine Anzahl der Doppellagen, die geringer als die Anzahl der übrigen Doppellagen ist, ist entgegen der vorgegebenen Umfangsrichtung gegenüber den übrigen Doppellagen um wenigstens eine Nut verschoben.

Jede Wicklungszone ist in Umfangsrichtung in erste bis q-te Teilwicklungszonen untergliedert. Die Teilwicklungszonen umfassen jeweils alle Lagen. Die Teilwicklungszonen sind entsprechend ihrer Reihenfolge in Umfangsrichtung benannt sind. Die Statorwicklung weist für einen jeweiligen Strang eine Phasenwicklung auf. Die Phasenwicklung umfasst wenigstens eine einen Strompfad ausbildende Teilwicklung. Die Teilwicklung weist innerhalb der Nuten angeordnete Innenabschnitte und an den Stirnseiten des Statorkerns angeordnete Verbindungsabschnitte auf. Die Verbindungsabschnitte verbinden jeweils zwei bezüglich des Strompfads unmittelbar aufeinanderfolgende Innenabschnitte elektrisch leitfähig.

Die Erfindung beruht auf der Erkenntnis, dass bei einer ungleichmäßigen Belegung der Wicklungszonen, in einer Drehrichtung ein günstigeres NVH-Verhalten als entlang der anderen Drehrichtung der Rotordrehbewegung erzielt wird. Eine solche Anordnung der Doppellagen kann auch als ungleichmäßige Sehnung (englisch pitch) der Statorwicklung bezeichnet werden. Da die Doppellagen teilweise entlang der vorgegebenen Umfangsrichtung verschoben sind, kann eine geringe Drehmomentwelligkeit entlang einer Drehrichtung der elektrischen Maschine erzielt werden. So kann ein besonders ruhiger Lauf der elektrischen Maschine bei einer gleichzeitigen symmetrischen Anordnung der Statorwicklung in den Nuten erreicht werden.

Der Statorkern ist typischerweise aus einer Vielzahl geschichtet angeordneter und/oder gegeneinander isolierter Einzelbleche ausgebildet. Der Statorkern kann insoweit auch als Statorblechpaket bezeichnet werden. Die Querschnittsebene wird insbesondere durch die Radialrichtung und durch die Umfangsrichtung aufgespannt. Die radiale Teilung verläuft insbesondere auf einer Ebene, die durch die Längsachse und die Radialrichtung aufgespannt wird.

Jede Wicklungszone erstreckt sich bevorzugt über wenigstens zwei Nuten, besonders bevorzugt über wenigstens drei Nuten oder wenigstens vier Nuten. In jeder Wicklungszone sind typischerweise Abschnitte der Statorwicklung, die zu derselben Phase der elektrischen Maschine gehören, angeordnet.

Die Anzahl der Lagen kann 6, 8, 10, 12, 14 oder 16 betragen. Es kann insbesondere eine radial äußere Doppellage, eine radial innere Doppellage oder eine radial mittlere Doppellage verschoben sein.

Jede Wicklungszone kann in einer senkrecht zur Längsachse liegenden Querschnittsebene durch eine mittige radiale Teilung in eine erste Seite und in eine zweite Seite untergliedert sein. Dabei kann die zweite Seite entlang einer vorgegebenen Umfangsrichtung auf die erste Seite folgen und jede Wicklungszone auf der ersten Seite eine geringe Querschnittsfläche der Nuten als auf der zweiten Seite belegen. Die Teilung kann durch die [(x+1)/2]-te Nut einer jeweiligen Wicklungszone verlaufen, wenn x ungerade ist, und mittig zwischen der (x/2)-ten und der [(x/2)+1]-ten Nuten einer jeweiligen Wicklungszone verlaufen, wenn x gerade ist, wobei x die Anzahl der von einer jeweiligen Wicklungszone belegten Nuten beschreibt.

Bei der erfindungsgemäßen Antriebseinrichtung kann die Statorwicklung als Runddrahtwicklung ausgebildet sein.

Alternativ kann die Statorwicklung als Formleiterwicklung, insbesondere als Haarnadelwicklung, ausgebildet sein. Bei einer Formleiterwicklung ist die Statorwicklung insbesondere durch eine Vielzahl von Formleitern ausgebildet, die einen Strompfad oder mehrere Strompfade für einen die Statorwicklung zur Erzeugung des Drehfelds durchfließenden Strom ausbilden. Die Formleiter können aus einem Metallstab ausgebildet sein und/oder einen rechteckigen oder abgerundet rechteckigen Querschnitt aufweisen. Vorzugsweise weist jeder oder ein Teil der Formleiter zwei gerade Abschnitte auf, die sich innerhalb einer jeweiligen Nut in axialer Richtung erstrecken. Die geraden Abschnitte können an einer ersten Stirnseite des Statorkerns durch einen Kopfabschnitt miteinander verbunden sein. Auf einer weiteren Stirnseite des Statorkerns kann sich an jeden geraden Abschnitt ein Endabschnitt anschließen. Der geraden Abschnitte sind vorzugsweise einstückig mit dem Kopfabschnitt und/oder mit den Endabschnitten ausgebildet. Vorzugsweise sind die Endabschnitte von jeweils zwei Formleitern stoffschlüssig, insbesondere durch Schweißen, elektrisch leitfähig und mechanisch miteinander verbunden, um die Statorwicklung auszubilden. Außerdem kann ein Teil der Formleiter, insbesondere zum Anschließen der Statorwicklung an einen Phasenanschluss und/oder an einen oder mehrere Sternpunkte vorgesehene Formleiter, einen geraden Abschnitt, einen Anschlussabschnitt auf der ersten Stirnseite und einen Endabschnitt auf der weiteren Stirnseite aufweisen.

In jeder Lage kann ein gerader Abschnitt eines der Formleiter angeordnet sein. Die Innenabschnitte können durch die geraden Abschnitte der Formleiter ausgebildet sein. Die Verbindungsabschnitte können an der ersten Stirnseite durch die Kopfabschnitte der Formleiter ausgebildet sein. Die Verbindungsabschnitte können an der weiteren Stirnseite durch die verbundenen Endabschnitte zweier unterschiedlicher Formleiter ausgebildet sein.

Die Statorwicklung kann einen Sternpunkt aufweisen. Die wenigstens eine Teilwicklung eines jeweiligen Strangs kann zu dem Sternpunkt zusammengeschaltet sein. Die Statorwicklung kann auch zwei Sternpunkte und mehrere Teilwicklungen je Strang aufweisen. Dann können jeweils eine der Teilwicklungen eines jeweiligen Strangs zu einem der Sternpunkte und eine andere der Teilwicklungen eines jeweiligen Strangs zu dem anderen der Sternpunkte zusammengeschaltet sein.

Gemäß einer ersten Ausgestaltungsvariante kann die Teilwicklung mehrere Leiterfolgen von bezüglich des Strompfads aufeinanderfolgenden Innenabschnitten umfassen, wobei jede Leiterfolge in einer der Doppellagen angeordnet ist und einen vollen Umlauf um den Statorkern ausbildet. Auf diese Weise kann eine Wellenwicklung als Statorwicklung ausgebildet werden.

Es ist auch bevorzugt, dass erste bis L/2-te der Leiterfolgen jeweils entlang einer Umfangsrichtung, insbesondere entlang der vorgegebenen Umfangsrichtung, verlaufen, wobei [(L/2)+1]-te bis L-te der Leiterfolgen jeweils entlang einer weiteren Umfangsrichtung, die der Umfangsrichtung entgegengesetzt ist, verlaufen. Dadurch kann die Wellenwicklung gegensinnig gewickelt werden.

In Weiterbildung kann vorgesehen sein, dass jede Leiterfolge, die einer anderen Leiterfolge bezüglich des Strompfads unmittelbar nachfolgt, in einer anderen Teilwicklungszone als die andere Leiterfolge angeordnet ist.

Bei der ersten Ausgestaltungsvariante wird es ferner bevorzugt, wenn eine weitere Teilwicklung, die der Teilwicklung entspricht, vorgesehen ist, wobei ein jeweiliger Innenabschnitt der weiteren Teilwicklung, der in derselben Lage derselben Wicklungszone wie ein Innenabschnitt der Teilwicklung liegt, in einer anderen Teilwicklungszone als diejenige Teilwicklungszone, in welcher der Innenabschnitt der Teilwicklung liegt, angeordnet ist. Die Teilwicklung kann insoweit auch als erste Teilwicklung und die weitere Teilwicklung als zweite Teilwicklung bezeichnet werden.

Im Folgenden werden eine zweite und eine dritte Ausgestaltungsvariante beschrieben.

Um bei der zweiten und der dritten Ausgestaltungsvariante eine kombinierte Schleifen-Wellen-Wicklung zu bilden, kann vorgesehen sein, dass eine der wenigstens einen Teilwicklung einen Satz von ersten bis P-ten Leiterfolgen erster Art umfasst, die in der Reihenfolge ihrer Benennung bezüglich des Strompfads aufeinander folgen und jeweils in ersten bis vierten unmittelbar benachbarten Wicklungszonen für denselben Strang angeordnet sind. Vorzugsweise umfasst jede Leiterfolge erster Art erste bis (L/2)-te Paare von einem ersten der Innenabschnitte und einem zweiten der Innenabschnitte, wobei die Paare entsprechend ihrer Reihenfolge entlang des Strompfads benannt sind. Die ersten und zweiten Innenabschnitte können in unterschiedlichen Lagen derselben Doppellage angeordnet sein. Dabei ist es bevorzugt, dass das erste Paar in der ersten Doppellage angeordnet ist, wobei das zweite Paar in der (L/2)-ten Doppellage angeordnet ist, wobei das dritte Paar in der zweiten Doppellage angeordnet ist oder die dritten bis (L/2)-ten Paare in der zweiten bis [(L/2)-1]-ten Doppellage angeordnet sind. Die dritte Wicklungszone, in welcher die Innenabschnitte der ersten bis (P-1)-ten Leiterfolgen angeordnet ist, kann die erste Wicklungszone, in welcher die der Leiterfolge bezüglich des Strompfads nachfolgende Leiterfolge angeordnet ist, sein. Die vierte Wicklungszone, in welcher die Innenabschnitte der ersten bis (P-1)-ten Leiterfolgen angeordnet ist, kann die zweite Wicklungszone, in welcher die der Leiterfolge bezüglich des Strompfads nachfolgende Leiterfolge angeordnet ist, sein. Diese Teilwicklung kann auch als erste Teilwicklung bezeichnet werden.

Alternativ oder zusätzlich kann bei der zweiten und der dritten Ausgestaltungsvariante vorgesehen sein, dass eine der wenigstens einen Teilwicklung einen Satz von ersten bis P-ten Leiterfolgen zweiter Art umfasst, die in der Reihenfolge ihrer Benennung bezüglich des Strompfads aufeinander folgen und jeweils in zwei unmittelbar benachbarten Wicklungszonen für denselben Strang angeordnet sind. Bevorzugt ist vorgesehen, dass jede Leiterfolge zweiter Art erste bis (L/2)-te Paare von einem ersten der Innenabschnitte, und einem zweiten der Innenabschnitte umfasst und die Paare entsprechend ihrer Reihenfolge entlang des Strompfads benannt sind. Dabei können die ersten und zweiten Innenabschnitte in unterschiedlichen Lagen der der Benennung des Paars entsprechenden Doppellage angeordnet sein. Vorzugsweise ist vorgesehen, dass die ersten bis (P-1)-ten Leiterfolgen zweiter Art durch einen der Verbindungsabschnitte mit der entlang des Strompfads nachfolgenden Leiterfolge zweiter Art verbunden sind und die nachfolgende Leiterfolge zweiter Art in zwei unmittelbar benachbarten Wicklungszonen für denselben Strang angeordnet ist. Diese Teilwicklung kann auch als zweite Teilwicklung bezeichnet werden.

Vorzugsweise verlaufen die Teilwicklungen in entgegengesetzten Umfangsrichtungen um den Statorkern.

Bei der zweiten Ausgestaltungsvariante kann vorgesehen sein, dass der erste Innenabschnitt der Paare der Leiterfolgen der oder einer jeweiligen Teilwicklung in einer der Lagen der Doppellage und der zweite Innenabschnitt der Paare der Leiterfolgen der oder einer jeweiligen Teilwicklung in der andere der Lagen der Doppellage angeordnet sind.

Bei der dritten Ausgestaltungsvariante können der erste Innenabschnitt der ungeradzahlig benannten Paare der Leiterfolgen der oder einer jeweiligen Teilwicklung in einer der Lagen der Doppellage, der zweite Innenabschnitt der ungeradzahlig benannten Paare der Leiterfolgen der oder einer jeweiligen Teilwicklung in der anderen Lage der Doppellage, der erste Innenabschnitt der geradzahlig benannten Paare der Leiterfolgen der oder einer jeweiligen Teilwicklung in der anderen Lage der Doppellage und der zweite Innenabschnitt der geradzahlig benannten Paare der Leiterfolgen der oder einer jeweiligen Teilwicklung in der einen Lage der Doppellage angeordnet sein.

In bevorzugter Ausgestaltung kann ferner vorgesehen sein, dass die oder eine jeweilige Teilwicklung insgesamt q Sätze der Leiterfolgen umfasst, die jeweils in derselben Teilwicklungszone angeordnet sind, wobei jeder Satz, der einem anderen Satz derselben Teilwicklung bezüglich des Strompfads unmittelbar nachfolgt, in einer anderen Teilwicklungszone als der andere Satz angeordnet ist.

Die der Erfindung zugrundeliegende Aufgabe wird ferner gelöst durch eine Antriebseinrichtung für ein elektrisches Fahrzeug, aufweisend: einen erfindungsgemäßen Stator, wobei der Stator zur Erzeugung eines magnetischen Drehfelds eingerichtet ist; eine Wandlungseinrichtung zur Wandlung magnetischer Energie des Drehfelds in eine Ausgabedrehbewegung der Antriebseinrichtung, wobei die Wandlungseinrichtung einen Rotor aufweist, der mit dem Stator eine rotierende elektrische Maschine ausbildet, sodass der Rotor in eine Rotordrehbewegung, die in Abhängigkeit des Drehfelds wahlweise eine von zwei entgegensetzen Drehrichtungen aufweist, versetzbar ist, und einen Übertragungsabschnitt aufweist, der zum Übertragen der Rotordrehbewegung in die Ausgabedrehbewegung eingerichtet ist; wobei die Wandlungseinrichtung eine der zwei Drehrichtungen der Rotordrehbewegung als Vorzugsdrehrichtung aufweist, wobei die Vorzugsdrehrichtung der vorgegebenen Umfangsrichtung entspricht.

Der Rotor kann permanenterregt oder nicht permanenterregt sein. Der Rotor kann fremderregt sein. Der Rotor kann magneterregt oder spannungserregt sein. Der Übertragungsabschnitt ist insbesondere auch zur Umformung der Rotordrehbewegung in die Ausgabedrehbewegung eingerichtet. Die Drehrichtungen der Rotordrehbewegung können auch als Orientierungen der Rotordrehbewegung aufgefasst werden, sodass die Vorzugsdrehrichtung einer Vorzugsorientierung entspricht.

Die Vorzugsdrehrichtung kann auf verschiedene Weise vorgegeben sein. Allgemein kann ein Vorliegen der Vorzugsdrehrichtung der Rotordrehbewegung das Fahrzeug zu einer Vorwärtsfahrt veranlassen und ein Vorliegen der anderen Drehrichtung der Rotordrehbewegung das Fahrzeug zu einer Rückwärtsfahrt veranlassen.

Es ist möglich, dass ein Wirkungsgrad des Übertragungsabschnitts bei der Vorzugsdrehrichtung höher als bei der anderen Drehrichtung ist. Mit anderen Worten kann der Übertragungsabschnitt derart eingerichtet sein, dass die Übertragung der Rotordrehbewegung in die Ausgabedrehbewegung bei Vorliegen der Vorzugsdrehrichtung effizienter als bei Vorliegen der anderen Drehrichtung der Rotordrehbewegung ist. Beispielsweise sind mechanische Verluste des Übertragungsabschnitts bei Vorliegen der Vorzugsdrehrichtung geringer als bei Vorliegen der anderen Drehrichtung.

Es kann auch vorgesehen sein, dass der Übertragungsabschnitt ein Getriebe mit einer die Vorzugsdrehrichtung bestimmenden asymmetrischen Ausgestaltung aufweist. So kann beispielsweise ein jeweiliger Zahn von miteinander kämmenden Zahnrädern des Getriebes asymmetrisch ausgebildet sein.

Die Antriebseinrichtung kann ferner eine Steuerungseinrichtung für den Übertragungsabschnitt aufweisen, die für die Vorzugsdrehrichtung eine höhere Anzahl von wählbaren Betriebsmodi aufweist als für die andere der Drehrichtungen. So kann eine höhere Anzahl von Betriebsmodi für die Vorwärtsfahrt vorgesehen sein als für die Rückwärtsfahrt.

Es ist auch möglich, dass die Antriebseinrichtung eine Belüftungseinrichtung aufweist, die bei der Vorzugsdrehrichtung eine höhere Kühleffizienz als bei der anderen der Drehrichtungen aufweist. Die höhere Kühleffizienz kann sich beispielsweise aus der Position eines Lufteinlasses ergeben, der beim Vorliegen der Vorzugsdrehrichtung Fahrtwind erhält.

Die der Erfindung zugrundeliegende Aufgabe wird ferner gelöst durch ein Fahrzeug, umfassend eine erfindungsgemäße Antriebseinrichtung, die dazu eingerichtet ist das Fahrzeug anzutreiben.

Die Vorzugsdrehrichtung kann auch eine Einbaulage der Antriebseinrichtung in einer Fahrzeugkarosserie vorgegeben sein. Vorzugsweise liegt die Ausgabedrehbewegung an einer Achse und/oder an Rädern des Fahrzeugs an.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines Ausführungsbeispiels des erfindungsgemäßen Fahrzeugs mit einem ersten Ausführungsbeispiel der erfindungsgemäßen Antriebseinrichtung;
- Fig. 2: eine perspektivische Ansicht eines ersten Ausführungsbeispiels eines erfindungsgemäßen Stators;
- Fig. 3: eine Prinzipskizze der im Statorkern angeordneten Statorwicklung gemäß dem ersten Ausführungsbeispiel;
- Fig. 4: eine Prinzipskizze einer Wicklungszone in den Nuten gemäß dem ersten Ausführungsbeispiel;
- Fig. 5: ein Blockschaltbild der Statorwicklung gemäß dem ersten Ausführungsbeispiel;
- Fig. 6: ein Wicklungsschema einer Phase der Statorwicklung gemäß dem ersten Ausführungsbeispiel;
- Fig. 7: ein Blockschaltbild der Statorwicklung gemäß einem zweiten Ausführungsbeispiel des erfindungsgemäßen Stators;
- Fig. 8: ein Wicklungsschema einer Phase der Statorwicklung gemäß dem zweiten Ausführungsbeispiel;
- Fig. 9: ein Blockschaltbild der Statorwicklung gemäß einem dritten Ausführungsbeispiel des erfindungsgemäßen Stators; und
- Fig. 10: ein Wicklungsschema einer Phase der Statorwicklung gemäß dem dritten Ausführungsbeispiel.

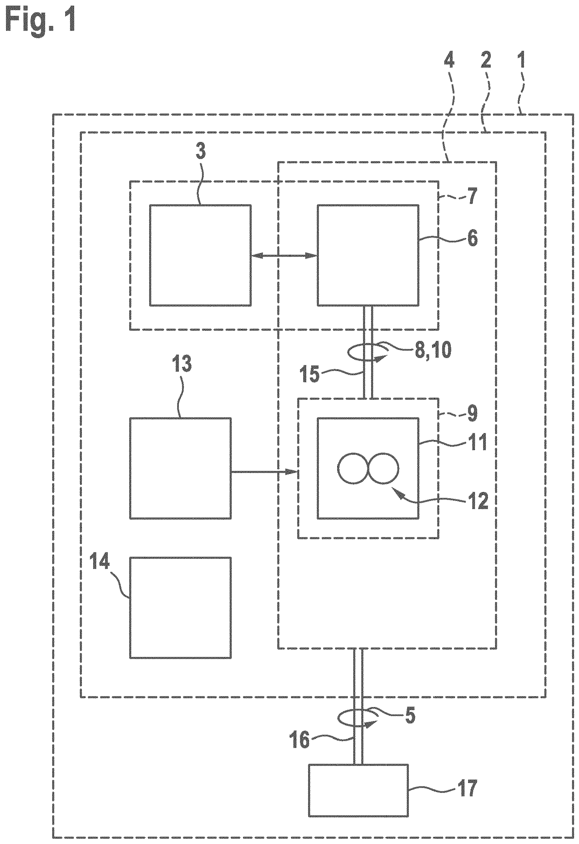

Fig. 1 ist eine Prinzipskizze eines Ausführungsbeispiels eines Fahrzeugs 1 mit einem ersten Ausführungsbeispiel einer Antriebseinrichtung 2.

Die Antriebseinrichtung 2 weist einen Stator 3, der zur Erzeugung eines magnetischen Drehfelds eingerichtet ist, auf. Daneben weist die Antriebseinrichtung 2 eine Wandlungseinrichtung 4 zur Wandlung magnetischer Energie des Drehfelds in eine Ausgabedrehbewegung 5 der Antriebseinrichtung 2 auf.

Die Wandlungseinrichtung 4 weist einen Rotor 6 auf, der mit dem Stator 3 eine rotierende elektrische Maschine 7 ausbildet, sodass der Rotor 6 in eine Rotordrehbewegung 8 versetzbar ist. Daneben weist die Wandlungseinrichtung 4 einen Übertragungsabschnitt 9 auf, der zum Übertragen und Umwandeln der Rotordrehbewegung 8 in die Ausgabedrehbewegung 5 eingerichtet ist.

Der Übertragungsabschnitt 9 weist eine von zwei Drehrichtungen der Rotordrehbewegung 8 als Vorzugsdrehrichtung 10 auf. Diese ergibt sich insbesondere dadurch, dass ein Wirkungsgrad des Übertragungsabschnitts 9 bei der Vorzugsdrehrichtung 10 höher als bei der anderen der Drehrichtungen ist. Dementsprechend ist der Übertragungsabschnitt 9 beispielsweise derart eingerichtet, dass die Übertragung der Rotordrehbewegung 8 in die Ausgabedrehbewegung 5 bei Vorliegen der Vorzugsdrehrichtung 10 effizienter als bei Vorliegen der anderen Drehrichtung der Rotordrehbewegung 8 ist.

Die Vorzugsdrehrichtung 10 kann sich auch daraus ergeben, dass der Übertragungsabschnitt 7 ein Getriebe 11 mit einer die Vorzugsdrehrichtung 9 bestimmenden asymmetrischen Ausgestaltung aufweist. Dazu kann beispielsweise ein jeweiliger Zahn von miteinander kämmenden Zahnrädern 12 der Getriebes 11 asymmetrisch ausgebildet sein. Ebenso kann sich die Vorzugsdrehrichtung 9 daraus ergeben, dass die Antriebseinrichtung 2 eine Steuerungseinrichtung 13 für den Übertragungsabschnitt 9 aufweist, die für die Vorzugsdrehrichtung 10 eine höhere Anzahl von wählbaren Betriebsmodi aufweist als für die andere der Drehrichtungen. So kann eine höhere Anzahl von Betriebsmodi für eine Vorwärtsfahrt des Fahrzeugs 1 vorgesehen sein als für dessen Rückwärtsfahrt. Ferner kann sich die Vorzugsdrehrichtung 9 daraus ergeben, dass die Antriebseinrichtung 2 eine Belüftungseinrichtung 14 aufweist, die bei der Vorzugsdrehrichtung 10 eine höhere Kühleffizienz als bei der anderen der Drehrichtungen aufweist. Daneben kann sich die Vorzugsdrehrichtung 10 durch eine Einbaulauge der Antriebseinrichtung 2 im Fahrzeugs 1 ergeben.

Wie Fig. 1 ferner zeigt, liegt die Rotordrehbewegung 8 über eine Welle 15 der Antriebseinrichtung 2 am Übertragungsabschnitt 9 an. Die Ausgabedrehbewegung 5 liegt über eine Achse 16 des Fahrzeugs 1 an dessen Rädern 17 an.

Der Stator 3 entspricht einem der im Folgenden beschriebenen Ausführungsbeispiel.

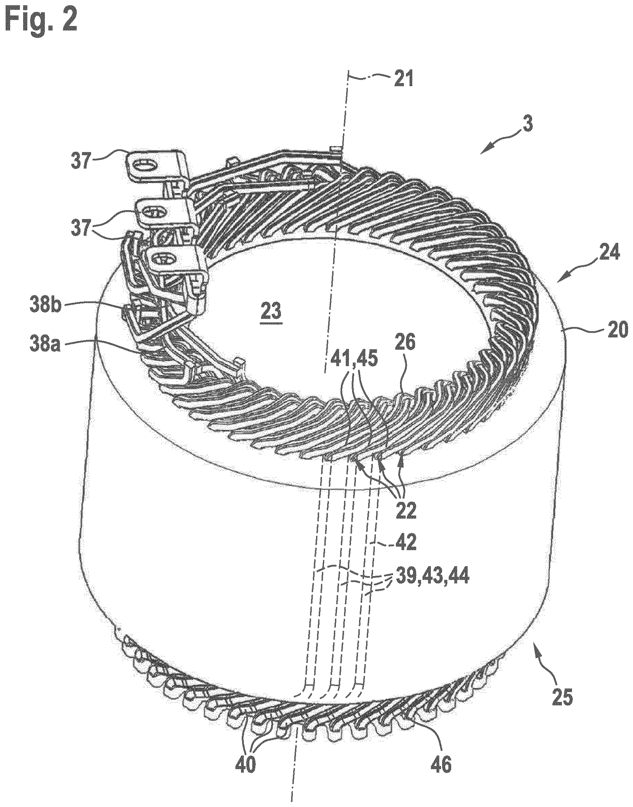

Fig. 2 ist eine perspektivische Ansicht eines Stators 3 gemäß dem ersten Ausführungsbeispiel.

Der Stator 3 weist einen Statorkern 20, der sich entlang einer Längsachse 21 erstreckt und in dem eine Vielzahl von in Umfangsrichtung angeordneten Nuten 22 ausgebildet ist. Der Statorkern 20 umgibt hier exemplarisch einen Aufnahmeraum 23 für den Rotor 6 (siehe Fig. 1) und weist eine erste Stirnseite 24 und eine dieser gegenüberliegende zweite Stirnseite 25 auf. Außerdem weist der Stator 3 eine Statorwicklung 26 auf.

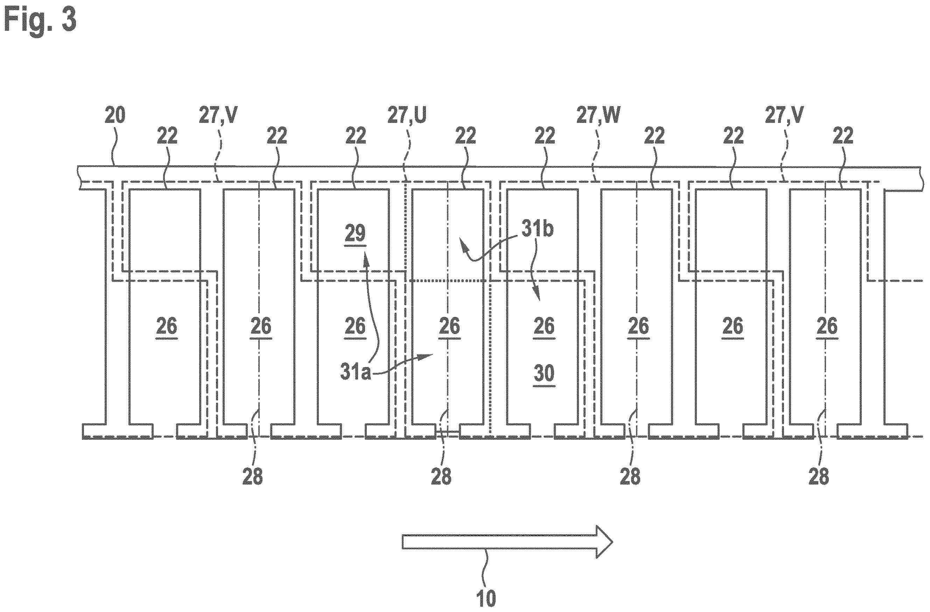

Fig. 3 ist eine Prinzipskizze der im Statorkern 20 angeordneten Statorwicklung 26.

Die Statorwicklung belegt mehrere Wicklungszonen 27 in den Nuten 22. Jede Wicklungszone ist dabei in einer senkrecht zur Längsachse 21 (siehe Fig. 2) liegenden Querschnittseben, die in Fig. 3 der Zeichenebene entspricht, durch eine mittige radiale Teilung 28 in eine erste Seite 29 und in eine zweite Seite 30 untergliedert. Im vorliegenden Ausführungsbeispiel erstreckt sich jede Wicklungszone 27 exemplarisch über drei Nuten 22, sodass der die Teilung 28 mittig durch die die zweite der drei Nuten 22 der Wicklungszone 27 verläuft.

Die zweite Seite 30 folgt entlang der Vorzugsdrehrichtung 10 auf die erste Seite 29. Ersichtlich belegt die jede Wicklungszone 27 auf der ersten Seite 29 eine geringe Querschnittsfläche der Nuten 22 als auf der zweiten Seite 30.

In Fig. 3 ist ferner zu erkennen, dass die Statorwicklung 26 N = 3 Stränge U, V, W für eine jeweilige Phase der elektrischen Maschine 7 (siehe Fig. 1) aufweist. Jede Wicklungszone 27 enthält nur Anteile der Statorwicklung 26 desselben Strangs U, V, W. Eine Lochzahl q der Statorwicklung 26 beträgt im vorliegenden Ausführungsbeispiel zwei. Jede Wicklungszone 27 erstreckt sich vorliegend über eine Anzahl von Nuten 22, die q+1 beträgt. Zudem ist jede Wicklungszone 27 in erste bis q-te Teilwicklungszonen 31a, 31b, nämlich in eine erste Teilwicklungszone 31a und in eine zweite Teilwicklungszone 31b untergliedert.

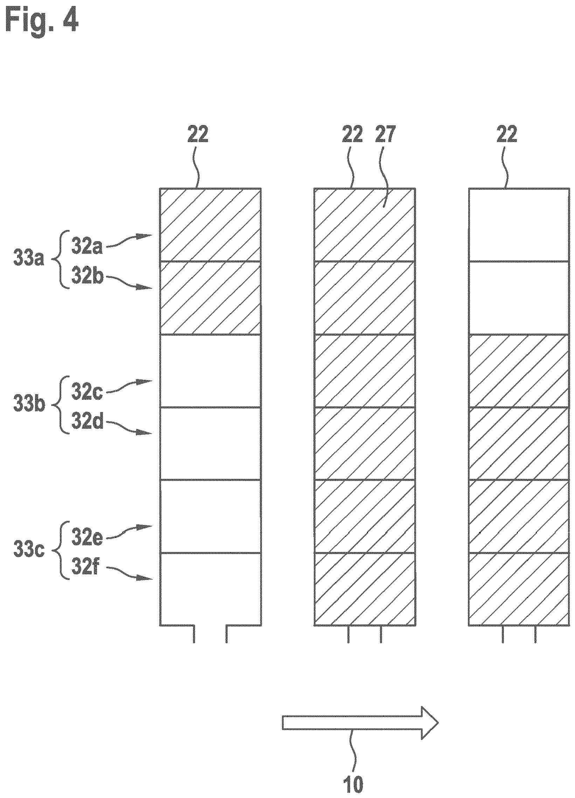

Fig. 4 ist eine Prinzipskizze einer Wicklungszone 27 in den Nuten 22.

Jede Wicklungszone 27, die in Fig. 3 durch eine Schraffur gekennzeichnet ist, ist radial in erste bis sechste (L-te) Lagen 32a-f untergliedert, die nach ihrer Reihenfolge in Radialrichtung von radial außen nach radial innen benannt sind. Die Lagen 32a-f bilden erste bis dritte [(L/2)-te] Doppellagen 33a-d, wobei die i-te Doppellage die (2i-1)-te und die (2i)-te Lage für alle 1 ≤ i ≤ (L/2) umfasst. Demnach umfassen die erste Doppellage 33a die erste Lage 32a und die zweite Lage 32b, die zweite Doppellage 33b die dritte Lage 32c und die vierte Lage 32d und die dritte Doppellage 33c die fünfte Lage 32e und die sechste Lage 32f. Eine Doppellage 33a, vorliegend die radial äußerste Doppellage 33a, ist entgegen Vorzugsdrehrichtung 10 gegenüber den übrigen Doppellagen 33b, 33c entgegen der Vorzugsdrehrichtung um eine Nut 22 verschoben.

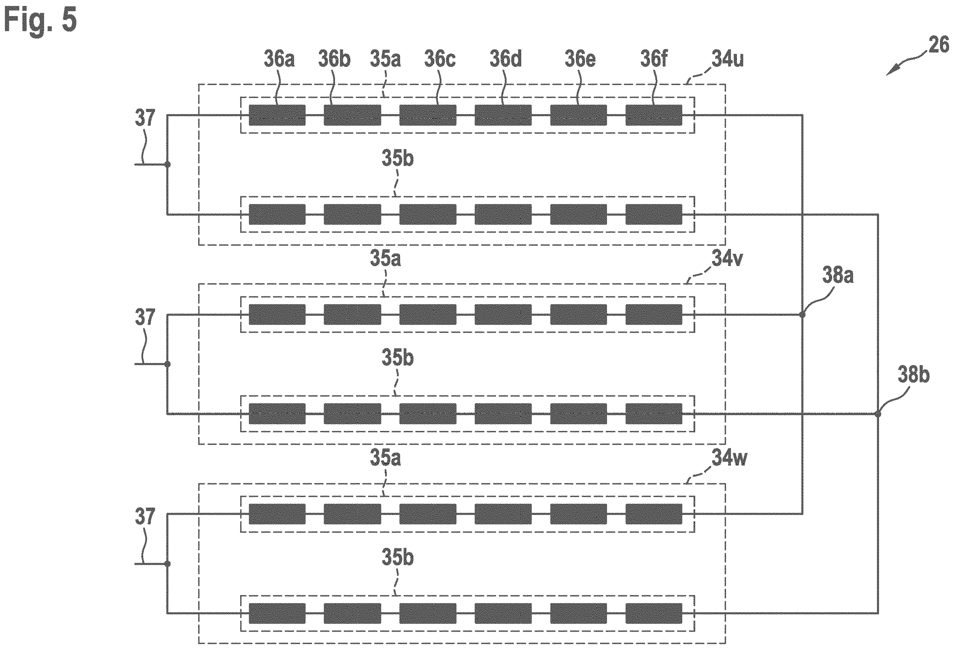

Fig. 5 ist ein Blockschaltbild der Statorwicklung 26 gemäß dem ersten Ausführungsbeispiel.

Die Statorwicklung 23 weist für jeden Strang U, V, W eine Phasenwicklung 34u, 34v, 34w auf. Jede Phasenwicklung 34u, 34v, 34w umfasst eine erste Teilwicklung 35a und eine zweite Teilwicklung 35b, die jeweils einen Strompfad ausbilden. Jede Teilwicklung 35a, 35b umfasst eine der Anzahl der Schichten L entsprechende Anzahl von Leiterfolgen 36a-f, die in Reihe geschaltet sind.

Jede Phasenwicklung 34u, 34v, 34w ist an einen Phasenanschluss 37 angeschlossen. Die Phasenwicklungen 34u, 34v, 34w sind ferner zu zwei Sternpunkten 38a, 38b zusammengeschaltet, wobei die ersten Teilwicklungen 35a zum ersten Sternpunkt 38a und die zweiten Teilwicklungen 35b zum zweiten Sternpunkt 38b zusammengeschaltet sind. Die Phasenanschlüsse 37 und die Sternpunkte 38a, 38b sind auch in Fig. 2 dargestellt.

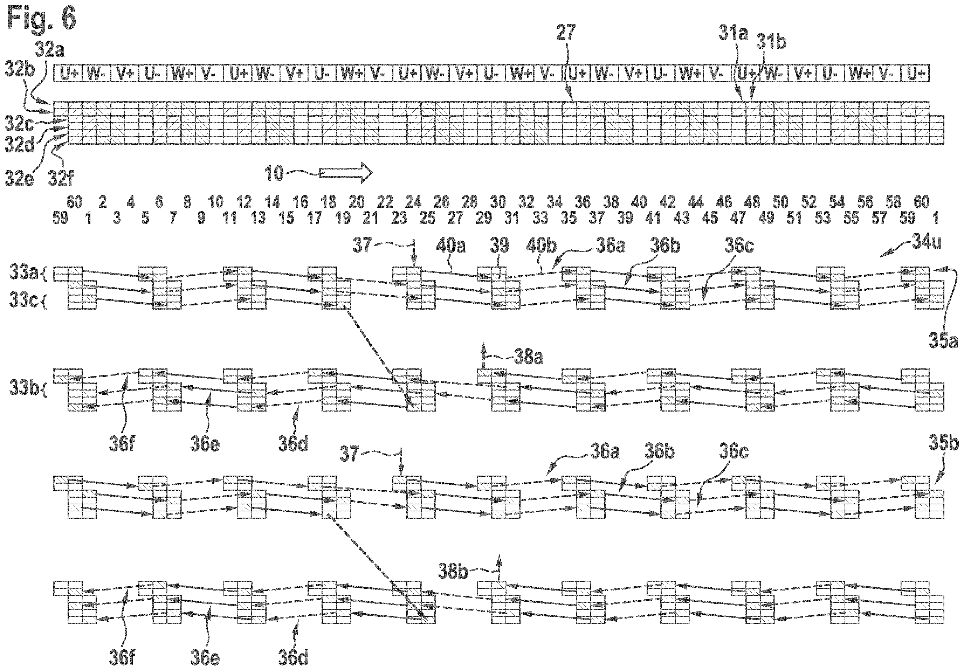

Fig. 6 ist ein Wicklungsschema einer Phase U der Statorwicklung 26 gemäß dem ersten Ausführungsbeispiel.

Die Statorwicklung 26 weist 2·P = 10 Pole, N = 3 Phasen und eine Lochzahl q = 2 auf. Die Anzahl der Nuten 22 beträgt 2·P·N·q = 60. Eine Nutnummerierung von 1 bis 60 ist in Fig. 6 angegeben. Jede Teilwicklung 35a, 35b umfasst die innerhalb der Nuten 22 angeordnete Innenabschnitte 39 und an den Stirnseiten 24, 25 des Statorkerns 20 angeordnete Verbindungsabschnitte 40, 41 (vgl. Fig. 2), welche jeweils zwei bezüglich des Strompfads unmittelbar aufeinanderfolgende Innenabschnitte 39 elektrisch leitfähig verbinden. Dabei befinden sich die Verbindungsabschnitte 40 an der zweiten Stirnseite 25 und die Verbindungsabschnitte 41 an der ersten Stirnseite 24. In Fig. 6 sind die Verbindungsabschnitte 40 durch durchgezogene Linien und die Verbindungsabschnitte 41 durch gestrichelte Linien dargestellt.

Die Statorwicklung 26 ist als Wellenwicklung ausgebildet. Die Leiterfolgen 36a-f sind jeweils durch mehrere aufeinanderfolgende und durch Verbindungsabschnitte 40, 41 in Reihe geschaltete Innenabschnitte 39 ausgebildet. Beim ersten Ausführungsbeispiel bildet jede Leiterfolge 36a-f einen vollen Umlauf um den Statorkern 20 in Umfangsrichtung aus. Dabei verlaufen die ersten bis dritten (L/2-ten) Leiterfolgen 36a-c jeweils entlang der Vorzugsdrehrichtung 10 und die vierten bis sechsten Leiterfolgen 36c-f jeweils entgegengesetzt zu den ersten bis dritten Leiterfolgen 36a-c, also gegen die Vorzugsdrehrichtung 10. Jede Leiterfolge 36a-f ist in einer der Doppellagen 33a-c angeordnet. Jede Leiterfolge 36b-f, die einer anderen Leiterfolge 36a-e bezüglich des Strompfads unmittelbar nachfolgt, ist in einer anderen Teilwicklungszone 31a, 31b als die andere Leiterfolge 36a-e angeordnet. Die Leiterfolgen 36a-f sind dadurch abwechselnd in unterschiedlichen Teilwicklungszonen 31a, 31b angeordnet.

Die zweite Teilwicklung 35b entspricht insoweit ersten Teilwicklung 35a. Bei der zweiten Teilwicklung 35b ist ein jeweiliger Innenabschnitt 39, der in derselben Lage 32a-f derselben Wicklungszone 27 wie ein Innenabschnitt 39 der ersten Teilwicklung 35a liegt, in einer anderen Teilwicklungszone 31a, 31b als diejenige Teilwicklungszone 31a, 31b, in welcher der Innenabschnitt 39 der ersten Teilwicklung 35a liegt, angeordnet.

Bei beiden Teilwicklungen 35a, 35b sind die unmittelbar durch einen Verbindungsabschnitt 40, 41 verbundene Innenabschnitte 39, die derselben Leiterfolge 36a-f angehören, sind um q·N = 6 Nuten voneinander entfernt.

Bei der ersten Teilwicklung 35a sind der Innenabschnitt 39 der ersten Leiterfolge 36a und der mit ihm unmittelbar durch einen Verbindungsabschnitt 41 verbundene Innenabschnitt 39 der zweiten Leiterfolge 36b um q·N = 6 Nuten voneinander entfernt. Der Innenabschnitt 39 der zweiten Leiterfolge 36b und der mit ihm unmittelbar durch einen Verbindungsabschnitt 41 verbundene Innenabschnitt 39 der dritten Leiterfolge 36c sind um q·N+1 = 7 Nuten voneinander entfernt. Der Innenabschnitt 39 der dritten Leiterfolge 36c und der mit ihm unmittelbar durch einen Verbindungsabschnitt 41 verbundene Innenabschnitt 39 der vierten Leiterfolge 36d sind um q·N-1 = 5 Nuten voneinander entfernt. Der Innenabschnitt 39 der vierten Leiterfolge 36d und der mit ihm unmittelbar durch einen Verbindungsabschnitt 41 verbundene Innenabschnitt 39 der fünften Leiterfolge 36e sind um q·N-1 = 5 Nuten voneinander entfernt. Der Innenabschnitt 39 der fünften Leiterfolge 36e und der mit ihm unmittelbar durch einen Verbindungsabschnitt 41 verbundene Innenabschnitt 39 der sechsten Leiterfolge 36f sind um q·N+2 = 8 Nuten voneinander entfernt.

Bei der zweiten Teilwicklung 35b sind der Innenabschnitt 39 der ersten Leiterfolge 36a und der mit ihm unmittelbar durch einen Verbindungsabschnitt 41 verbundene Innenabschnitt 39 der zweiten Leiterfolge 36b um q·N+2 = 8 Nuten voneinander entfernt. Der Innenabschnitt 39 der zweiten Leiterfolge 36b und der mit ihm unmittelbar durch einen Verbindungsabschnitt 41 verbundene Innenabschnitt 39 der dritten Leiterfolge 36c sind um q·N-1 = 5 Nuten voneinander entfernt. Der Innenabschnitt 39 der dritten Leiterfolge 36c und der mit ihm unmittelbar durch einen Verbindungsabschnitt 41 verbundene Innenabschnitt 39 der vierten Leiterfolge 36d sind um q·N+1 = 7 Nuten voneinander entfernt. Der Innenabschnitt 39 der vierten Leiterfolge 36d und der mit ihm unmittelbar durch einen Verbindungsabschnitt 41 verbundene Innenabschnitt 39 der fünften Leiterfolge 36e sind um q·N+1 = 7 Nuten voneinander entfernt. Der Innenabschnitt 39 der fünften Leiterfolge 36e und der mit ihm unmittelbar durch einen Verbindungsabschnitt 41 verbundene Innenabschnitt 39 der sechsten Leiterfolge 36f sind um q·N = 6 Nuten voneinander entfernt.

Wie Fig. 6 ferner zu entnehmen ist, sind die ersten Leiterfolgen 36a der Teilwicklungen 35a, 35b an den Phasenanschluss 37 angeschlossen. Die sechsten Leiterfolgen 36f der Teilwicklungen 35a, 35b sind an die Sternpunkte 38a, 38b angeschlossen, wobei hier die sechste Leiterfolge 36f der ersten Teilwicklung 35a an den ersten Sternpunkt 38a angeschlossen ist und die sechste Leiterfolge 36f der zweiten Teilwicklung 35b an den zweiten Sternpunkt 38b angeschlossen ist.

Die Phasenwicklungen 34v, 34w der Stränge V, W entsprechen der zuvor beschriebenen Phasenwicklung 34u des Strangs U und sind um q·N = 6 Nuten in Umfangsrichtung zum Strang U verschoben angeordnet.

Mit Bezug zu Fig. 2 ist die Statorwicklung 26 ist als Haarnadelwicklung durch eine Vielzahl von Formleitern 42 ausgebildet. Die Formleiter 42 sind aus einem Metallstab ausgebildet und weisen einen rechteckigen oder abgerundet rechteckigen Querschnitt auf. Ein Teil der Formleiter 42 weist zwei gerade Abschnitte 43, 44 auf, die sich innerhalb einer jeweiligen Nut 22 in axialer Richtung erstrecken und die Innenabschnitte 39 ausbilden. Die geraden Abschnitte 43, 44 sind an einer ersten Stirnseite 24 des Statorkerns 20 durch einen Kopfabschnitt 45 miteinander verbunden, der den Verbindungsabschnitt 40b ausbildet. Der Kopfabschnitt 45 ist einstückig mit den geraden Abschnitten 43, 44 ausgebildet. Auf einer zweiten Stirnseite 25 des Statorkerns 20 schließt sich an jeden geraden Abschnitt 43, 44 ein Endabschnitt 46 an. Die Endabschnitte 46 von jeweils zwei Formleitern 42 sind stoffschlüssig, insbesondere durch Schweißen, elektrisch leitfähig und mechanisch miteinander verbunden. Zwei miteinander verbundene Endabschnitte 46 bilden einen Verbindungsabschnitt 40a an der zweiten Stirnseite 25 aus. Die nicht im Detail dargestellten Formleiter, die mit einem der Phasenanschlüsse 37 bzw. einem der Sternpunkte 38a, 38b verbunden sind, weisen lediglich einen geraden Abschnitt und einen Endabschnitt, der mit dem Endabschnitt 46 eines zwei gerade Abschnitte 43, 44 aufweisenden Formleiters einen Verbindungsabschnitt 40a auf der zweiten Stirnseite 25 ausbildet.

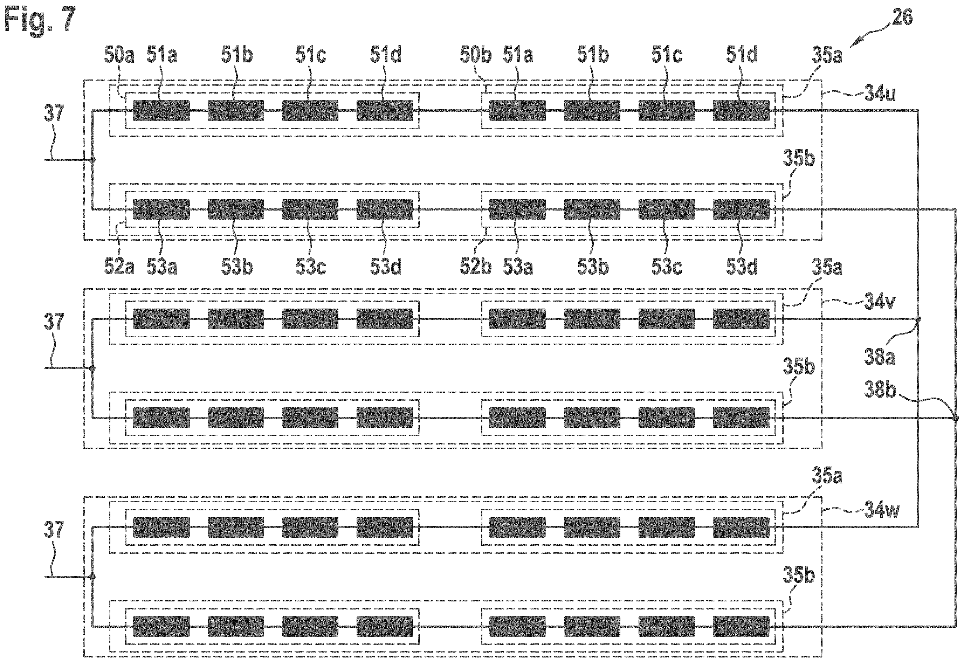

Fig. 7 ist ein Blockschaltbild der Statorwicklung 26 gemäß einem zweiten Ausführungsbeispiel eines Stators 3. Bis auf die im Folgenden beschriebenen Abweichungen lassen sich alle Ausführungen zum ersten Ausführungsbeispiel auf das zweite Ausführungsbeispiel übertragen. Gleiche oder gleichwirkende Komponenten sind mit identischen Bezugszeichen versehen.

Beim zweiten Ausführungsbeispiel ist die Statorwicklung 26 ein kombinierte Wellen-Schleifen-Wicklung. Die Statorwicklung 26 umfasst die erste Teilwicklung 35a einer jeweiligen Phasenwicklung 34u, 34v, 34w einen ersten Satz 50a von ersten bis vierten (P-ten) Leiterfolgen erster Art 51a-d, die in der Reihenfolge ihrer Benennung bezüglich des Strompfads aufeinander folgen. Daneben umfasst die erste Teilwicklung 35a einen zweiten Satz 50b von ersten bis vierten (P-ten) Leiterfolgen erster Art 51a-d.

Die zweite Teilwicklung 35b einer jeweiligen Phasenwicklung 34u, 34v, 34w umfasst einen ersten Satz 52a von ersten bis vierten (P-ten) Leiterfolgen zweiter Art 53a-d, die in der Reihenfolge ihrer Benennung bezüglich des Strompfads aufeinander folgen. Daneben umfasst die zweite Teilwicklung 35b einen zweiten Satz 52b von ersten bis vierten (P-ten) Leiterfolgen zweiter Art 53a-d.

Die Anzahl der Sätze 50a, 50b, 52a, 52b einer jeweiligen Teilwicklung 35a, 35b entspricht dabei der Lochzahl q.

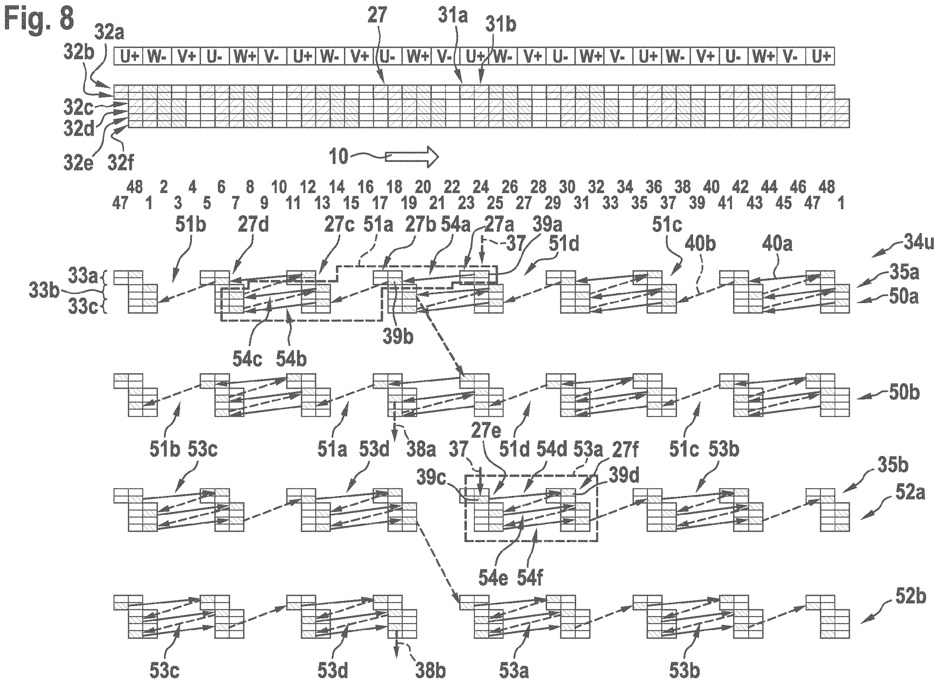

Fig. 8 ist ein Wicklungsschema einer Phase U der Statorwicklung 26 gemäß dem zweiten Ausführungsbeispiel.

Die Statorwicklung 26 gemäß dem zweiten Ausführungsbeispiel weist 2·P = 8 Pole und dementsprechend 48 Nuten 22 auf.

Jede Leiterfolge erster Art 51-d ist in ersten bis vierten unmittelbar benachbarten Wicklungszonen 27a-d für denselben Strang U angeordnet und umfasst erste bis dritte [(L/2)-te] Paare 54a-c von einem ersten Innenabschnitt 39a und einem zweiten Innenabschnitt 39b. Die Paare 54a-c sind entsprechend ihrer Reihenfolge entlang des Strompfads benannt.

Die ersten Innenabschnitte 39a und die zweiten Innenabschnitte 39b sind in unterschiedlichen Lagen 32a-f derselben Doppellage 33a-c angeordnet. Das erste Paar 54a ist in der ersten Doppellage 33a angeordnet, das zweite Paar 54b ist in der dritten [(L/2)-ten] Doppellage 33c und das dritte Paar 54c ist in der zweiten Doppellage 33b angeordnet. Allgemein gesprochen sind die dritten bis (L/2)-ten Paare in der zweiten bis [(L/2)-1]-ten Doppellage angeordnet.

Die dritte Wicklungszone 27c, in welcher die Innenabschnitte 39a, 39b der ersten bis dritten Leiterfolgen erster Art 51a-c [(P-1)-ten] angeordnet sind, ist die erste Wicklungszone 27a, in welche die der Leiterfolge erster Art 51a-c bezüglich des Strompfads nachfolgende Leiterfolge 51b-d angeordnet ist. Entsprechend ist die vierte Wicklungszone 27d, welcher die Innenabschnitte 39a, 39b der ersten bis dritten [(P-1)-ten] Leiterfolgen erster Art 51a-c angeordnet sind, die zweite Wicklungszone 27b, in welcher die der Leiterfolge erster Art 51a-c bezüglich des Strompfads nachfolgende Leiterfolge erster Art 51b-d angeordnet ist.

Jede Leiterfolge zweiter Art 53a-d ist in zwei unmittelbar benachbarten Wicklungszonen 27e, 27f für denselben Strang U angeordnet und umfasst erste bis dritte [(L/2)-te] Paare 54d-f von einem ersten Innenabschnitt 39c und einem zweiten Innenabschnitte 39d. Die Paare 54d-f sind entsprechend ihrer Reihenfolge entlang des Strompfads benannt.

Die ersten und zweiten Innenabschnitte 39c, 39d sind in unterschiedlichen Lagen 32a-f der der Benennung des Paars 54d-f entsprechenden Doppellage 33a-c angeordnet. Die ersten bis dritten [(P-1)-ten] Leiterfolgen zweiter Art 53a-c sind durch einen der Verbindungsabschnitte 40b mit der entlang des Strompfads nachfolgenden Leiterfolge zweiter Art 53b-d verbunden. Die nachfolgende Leiterfolge zweiter Art 53b-d ist in zwei unmittelbar benachbarten Wicklungszonen 27 für denselben Strang U angeordnet.

Die ersten und zweiten Teilwicklungen 35a, 35b verlaufen in entgegengesetzten Umfangsrichtungen um den Statorkern 20, wobei die zweite Teilwicklung 35b entlang der Vorzugsdrehrichtung 10 verläuft.

Beim zweiten Ausführungsbeispiel sind der erste Innenabschnitt 39a, 39c der Paare 54a-f in einer der Lagen 32a-f der Doppellage 33a-c und der zweite Innenabschnitt 39b, 39d der Paare 54a-f in der anderen Lage 32a-f der Doppellage angeordnet.

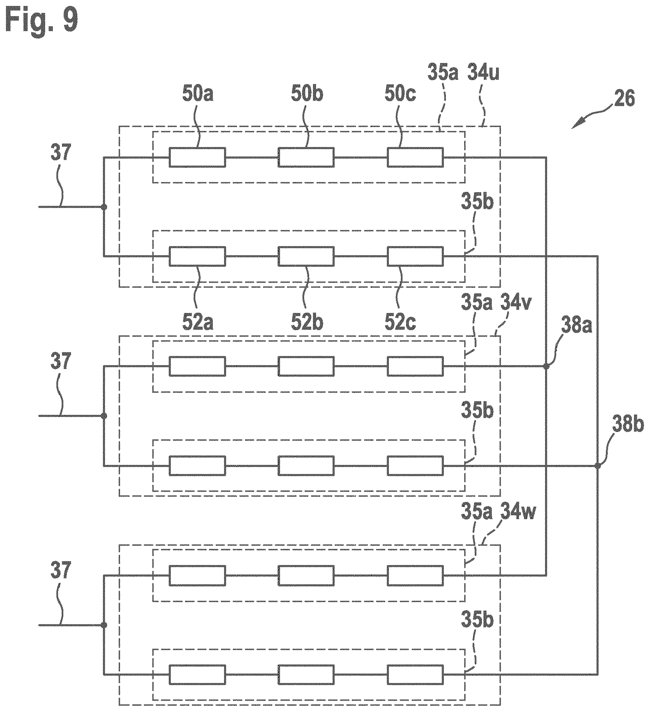

Fig. 9 ist ein Blockschaltbild der Statorwicklung 26 gemäß einem dritten Ausführungsbeispiel eines Stators 3. Bis auf die im Folgenden beschriebenen Abweichungen lassen sich alle Ausführungen zum zweiten Ausführungsbeispiel auf das dritte Ausführungsbeispiel übertragen. Gleiche oder gleichwirkende Komponenten sind mit identischen Bezugszeichen versehen.

Beim dritten Ausführungsbeispiel weisen die erste Teilwicklung 35a zusätzlich einen dritten Satz 50c Leiterfolgen erster Art 51a-d und die zweite Teilwicklung 35b zusätzlich einen dritten Satz 52c Leiterfolgen zweiter Art 53a-d, wobei die Leiterfolgen 51a-d, 53a-d aus Gründen der Übersichtlichkeit in Fig. 9 nicht dargestellt sind.

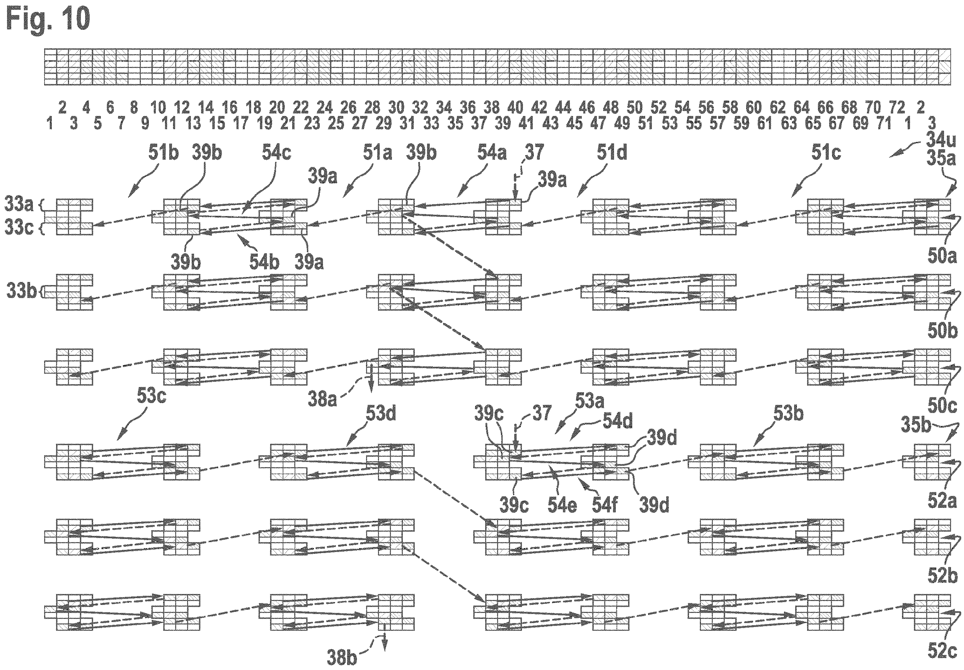

Fig. 10 ist ein Wicklungsschema einer Phase U der Statorwicklung 26 gemäß dem dritten Ausführungsbeispiel.

Die Statorwicklung 26 gemäß dem dritten Ausführungsbeispiel weist - wie das zweite Ausführungsbeispiel - 2·P = 8 Pole, jedoch eine Lochzahl q = 3 auf. Die Anzahl der Nutten 22 beträgt dementsprechend 72. Aus der Erhöhung der Lochzahl q ergibt sich, dass jeder die dritten Sätze 50c, 52c vorgesehen sind.

Beim dritten Ausführungsbeispiel ist der erste Innenabschnitt 39a, 39c der ungeradzahlig benannten Paare 54a, 54c, 54d, 54f der Leiterfolgen 51a-d, 53a-d einer jeweiligen Teilwicklung 35a, 35b in einer der Lagen 32a-f der Doppellage 33a-c und der zweite Innenabschnitt 39b, 39d der ungeradzahlig benannten Paare 54a, 54c, 54d, 54f der Leiterfolgen 51a-d, 53a-d einer jeweiligen Teilwicklung 35a, 35b in der anderen Lage der Doppellage 33a-c angeordnet. Der erste Innenabschnitt 39a, 39c der geradzahlig benannten Paare 54b, 54e der Leiterfolgen 51a-d, 53a-d einer jeweiligen Teilwicklung 35a, 35b ist der anderen Lage 39b, 39d der Doppellage 33a-c angeordnet und der zweite Innenabschnitt 39b, 39d der geradzahlig benannten Paare 54, 54e der Leiterfolgen 51a-d, 53a-d einer jeweiligen Teilwicklung 35a, 35b ist in der einen Lage 32a-f der Doppellage 33a-c angeordnet.

Beim dritten Ausführungsbeispiel ist zudem die zweite Doppellage 33b gegenüber der ersten Doppellage 33a und der dritten Doppellage 33c entgegen der Vorzugsdrehrichtung 10 verschoben.

Gemäß weiteren Ausführungsbeispielen, die jeweils einem der zuvor beschriebenen Ausführungsbeispiele entsprechen, ist die Statorwicklung 26 nicht als Haarnadelwicklung, sondern als Runddrahtwicklung ausgebildet.

Gemäß weiteren Ausführungsbeispielen, die jeweils einem der zuvor beschriebenen Ausführungsbeispiele entsprechen, ist die Anzahl der Pole größer oder kleiner, wobei sich die Anzahl der Leiterfolgen entsprechend vergrößert oder reduziert.

Gemäß weiteren Ausführungsbeispielen, die jeweils einem der zuvor beschriebenen Ausführungsbeispiele entsprechen, weist die Statorwicklung 26 lediglich einen Sternpunkt für alle Teilwicklungen 35a, 35b auf.

## Patentansprüche

1. Stator (3) für eine elektrische Maschine (7) mit einem Statorkern (20), der sich entlang einer Längsachse (21) erstreckt, eine Stirnseite (24) und der eine der Stirnseite (24) gegenüberliegende weitere Stirnseite (25) aufweist, und mit einer Statorwicklung (26), wobei
- im Statorkern (20) eine Vielzahl von in Umfangsrichtung angeordneten Nuten (22) ausgebildet ist, wobei
- die Statorwicklung (26) mehrere Wicklungszonen (27) in den Nuten (22) belegt, wobei
- die Statorwicklung (26) eine Anzahl N Stränge (U, V, W) und eine Anzahl 2·P Pole aufweist und die Anzahl der Nuten (22) 2·P·N·q beträgt, wobei P, N und q natürliche Zahlen sind und q ≥ 2 ist, wobei
- sich jede Wicklungszone (27) über zumindest q+1 der Nuten (22) erstreckt, wobei
- jede Wicklungszone (27) radial in erste bis L-te Lagen (32a-f) untergliedert ist, die nach ihrer Reihenfolge in Radialrichtung benannt sind, wobei die Lagen (32a-f) erste bis (L/2)-te Doppellagen (33a-c) ausbilden, wobei die i-te Doppellage (33a-c) die (2i-1)-te und die (2i)-te Lage (32a-f) für alle 1 ≤ i ≤ (L/2) umfasst, wobei L ≥ 6 und gerade ist, wobei L und i natürliche Zahlen sind, wobei
- eine Anzahl der Doppellagen (33a-c), die geringer als die Anzahl der übrigen Doppellagen (33a-c) ist, entgegen der vorgegebenen Umfangsrichtung gegenüber den übrigen Doppellagen (33a-c) um wenigstens eine Nut (22) verschoben ist, wobei
- jede Wicklungszone (27) in Umfangsrichtung in erste bis q-te Teilwicklungszonen (31a, 31b) untergliedert ist, die jeweils alle Lagen (32a-f) umfassen und entsprechend ihrer Reihenfolge in Umfangsrichtung benannt sind, wobei
- die Statorwicklung (26) für einen jeweiligen Strang (U, V, W) eine Phasenwicklung (34u, 34v, 34w) aufweist, wobei
- die Phasenwicklung (34u, 34v, 34w) wenigstens eine einen Strompfad ausbildende Teilwicklung (35a, 35b) umfasst, die innerhalb der Nuten (22) angeordnete Innenabschnitte (39, 39a-d) und an den Stirnseiten (24, 25) des Statorkerns (20) angeordnete Verbindungsabschnitte (40, 41), welche jeweils zwei bezüglich des Strompfads unmittelbar aufeinanderfolgende Innenabschnitte (39, 39a-d) elektrisch leitfähig verbinden, umfasst.

2. Stator nach Anspruch 1, wobei
- die Teilwicklung (35a) mehrere Leiterfolgen (36a-f) von bezüglich des Strompfads aufeinanderfolgenden Innenabschnitten (39) umfasst, wobei
- jede Leiterfolge (36-af) in einer der Doppellagen (33a-c) angeordnet ist und einen vollen Umlauf um den Statorkern (20) ausbildet, wobei
- erste bis L/2-te der Leiterfolgen (36a-c) jeweils entlang einer Umfangsrichtung, insbesondere entlang der vorgegebenen Umfangsrichtung, verlaufen, wobei
- [(L/2)+1]-te bis L-te der Leiterfolgen (36d-f) jeweils entlang einer weiteren Umfangsrichtung, die der Umfangsrichtung entgegengesetzt ist, verlaufen.

3. Stator nach Anspruch 2, wobei
jede Leiterfolge (36b-f), die einer anderen Leiterfolge (36a-e) bezüglich des Strompfads unmittelbar nachfolgt, in einer anderen Teilwicklungszone (31a, 31b) als die andere Leiterfolge (36a-e) angeordnet ist.

4. Stator nach Anspruch 2 oder 3, wobei
- eine weitere Teilwicklung (35b), die der Teilwicklung (35a) entspricht, vorgesehen ist, wobei
- ein jeweiliger Innenabschnitt (39) der weiteren Teilwicklung (35b), der in derselben Lage (32a-f) derselben Wicklungszone (27) wie ein Innenabschnitt (39) der Teilwicklung (35a) liegt, in einer anderen Teilwicklungszone (31a, 31b) als diejenige Teilwicklungszone (31a, 31b), in welcher der Innenabschnitt (39) der Teilwicklung (35a) liegt, angeordnet ist.

5. Stator nach Anspruch 1, wobei
- eine der wenigstens einen Teilwicklung (35a) einen Satz (50a, 50b) von ersten bis P-ten Leiterfolgen erster Art (51a-d) umfasst, die in der Reihenfolge ihrer Benennung bezüglich des Strompfads aufeinander folgen und jeweils in ersten bis vierten unmittelbar benachbarten Wicklungszonen (27a-d) für denselben Strang (U, V, W) angeordnet sind, wobei
- jede Leiterfolge erster Art (51a-d) erste bis (L/2)-te Paare (54a-c) von einem ersten der Innenabschnitte (39a), und einem zweiten der Innenabschnitte (39b) umfasst und die Paare (54a-c) entsprechend ihrer Reihenfolge entlang des Strompfads benannt sind, wobei
- wobei die ersten und zweiten Innenabschnitte (39a, 39b) in unterschiedlichen Lagen (32a-f) derselben Doppellage (33a-c) angeordnet sind, wobei
- das erste Paar (54a) in der ersten Doppellage (33a) angeordnet ist, wobei
- das zweite Paar (54b) in der (L/2)-ten Doppellage (33c) angeordnet ist, wobei
- das dritte Paar (54c) in der zweiten Doppellage (33b) angeordnet ist oder die dritten bis (L/2)-ten Paare (54c) in der zweiten bis [(L/2)-1]-ten Doppellage (33b) angeordnet sind, wobei
- die dritte Wicklungszone (27c), in welcher die Innenabschnitte der ersten bis (P-1)-ten Leiterfolgen (51a-c) angeordnet sind, die erste Wicklungszone (27a), in welcher die der Leiterfolge (51a-c) bezüglich des Strompfads nachfolgende Leiterfolge (51b-d) angeordnet ist, ist, wobei
- die vierte Wicklungszone (27d), in welcher die Innenabschnitte (39) der ersten bis (P-1)-ten Leiterfolgen (51a-c) angeordnet sind, die zweite Wicklungszone (27b), in welcher die der Leiterfolge (51a-c) bezüglich des Strompfads nachfolgende Leiterfolge (51b-d) angeordnet ist, ist.

6. Stator nach Anspruch 1 oder Anspruch 5, wobei
- eine der wenigstens einen Teilwicklung (35b) einen Satz (52a, 52b) von ersten bis P-ten Leiterfolgen zweiter Art (53a-d) umfasst, die in der Reihenfolge ihrer Benennung bezüglich des Strompfads aufeinander folgen und jeweils in zwei unmittelbar benachbarten Wicklungszonen (27e, 27f) für denselben Strang (U, V, W) angeordnet sind, wobei
- jede Leiterfolge zweiter Art (53a-d) erste bis (L/2)-te Paare (54d-f) von einem ersten der Innenabschnitte (39c), und einem zweiten der Innenabschnitte (39d) umfasst und die Paare (54d-f) entsprechend ihrer Reihenfolge entlang des Strompfads benannt sind, wobei
- die ersten und zweiten Innenabschnitte (39c, 39d) in unterschiedlichen Lagen (32a-f) der der Benennung des Paars entsprechenden Doppellage (33a-c) angeordnet sind, wobei
- die ersten bis (P-1)-ten Leiterfolgen zweiter Art (53a-c) durch einen der Verbindungsabschnitte (41) mit der entlang des Strompfads nachfolgenden Leiterfolge zweiter Art (53b-d) verbunden sind und die nachfolgende Leiterfolge zweiter Art (53b-d) in zwei unmittelbar benachbarten Wicklungszonen (27) für denselben Strang (U, V, W) angeordnet ist.

7. Stator nach den Ansprüchen 5 und 6, wobei
die Teilwicklungen (35a, 35b) in entgegengesetzten Umfangsrichtungen um den Statorkern (20) verlaufen.

8. Stator nach einem der Ansprüche 5 bis 7, wobei
- der erste Innenabschnitt (39a, 39c) der Paare (54a-f) der Leiterfolgen (51a-d, 53a-d) der oder einer jeweiligen Teilwicklung (35a, 35b) in einer der Lagen (32a-f) der Doppellage (33a-c) und der zweite Innenabschnitt (39b, 39d) der Paare (54a-f) der Leiterfolgen (51a-d, 53a-d) der oder einer jeweiligen Teilwicklung (35a, 35b) in der andere der Lagen (33a-c) der Doppellage (33a-c) angeordnet sind oder
- der erste Innenabschnitt (39a, 39c) der ungeradzahlig benannten Paare (54a, 54c, 54d, 54f) der Leiterfolgen (51a-d, 53a-d) der oder einer jeweiligen Teilwicklung (35a, 35b) in einer der Lagen (32a-f) der Doppellage (33a-c), der zweite Innenabschnitt (39b, 39d) der ungeradzahlig benannten Paare (54a, 54c, 54d, 54f) der Leiterfolgen (51a-d, 53a-d) der oder einer jeweiligen Teilwicklung (35a, 35b) in der anderen Lage (32a-f) der Doppellage (33a-c), der erste Innenabschnitt (39a, 39c) der geradzahlig benannten Paare (54b, 54e) der Leiterfolgen (51a-d, 53a-d) der oder einer jeweiligen Teilwicklung (35a, 35b) in der anderen Lage (32a-f) der Doppellage (33a-c) und der zweite Innenabschnitt (39b, 39d) der geradzahlig benannten Paare (54b, 54e) der Leiterfolgen (51a-d, 53a-d) der oder einer jeweiligen Teilwicklung (35a, 35b) in der einen Lage (32a-f) der Doppellage (33a-c) angeordnet sind.

9. Stator nach einem der Ansprüche 5 bis 8, wobei
- die oder eine jeweilige Teilwicklung insgesamt q Sätze (50a-c, 52a-c) der Leiterfolgen (51a-d, 53a-d) umfasst, die jeweils in derselben Teilwicklungszone (31a, 31b) angeordnet sind, wobei
- jeder Satz (50b, 50c, 52b, 52c), der einem anderen Satz (50a, 50b, 52a, 52b) derselben Teilwicklung (35a, 35b) bezüglich des Strompfads unmittelbar nachfolgt, in einer anderen Teilwicklungszone (31a, 31b) als der andere Satz (50a, 50b, 52a, 52b) angeordnet ist.

10. Antriebseinrichtung (2) für ein elektrisches Fahrzeug (1), aufweisend:
- einen Stator (3) nach einem der vorhergehenden Ansprüche, wobei der Stator (3) zur Erzeugung eines magnetischen Drehfelds eingerichtet ist,
- eine Wandlungseinrichtung (4) zur Wandlung magnetischer Energie des Drehfelds in eine Ausgabedrehbewegung (5) der Antriebseinrichtung (2), wobei die Wandlungseinrichtung (4)
- einen Rotor (6) aufweist, der mit dem Stator (3) eine rotierende elektrische Maschine (7) ausbildet, sodass der Rotor (6) in eine Rotordrehbewegung (8), die in Abhängigkeit des Drehfelds wahlweise eine von zwei entgegensetzen Drehrichtungen aufweist, versetzbar ist, und
- einen Übertragungsabschnitt (9) aufweist, der zum Übertragen der Rotordrehbewegung (8) in die Ausgabedrehbewegung (5) eingerichtet ist, wobei die Wandlungseinrichtung (4) eine der zwei Drehrichtungen der Rotordrehbewegung (8) als Vorzugsdrehrichtung (10) aufweist, wobei die Vorzugsdrehrichtung (10) der vorgegebenen Umfangsrichtung entspricht.

11. Antriebseinrichtung nach Anspruch 10, wobei
- ein Wirkungsgrad des Übertragungsabschnitts (9) bei der Vorzugsdrehrichtung (10) höher als bei der anderen der Drehrichtungen ist und/oder
- der Übertragungsabschnitt (9) ein Getriebe (11) mit einer die Vorzugsdrehrichtung (10) bestimmenden asymmetrischen Ausgestaltung aufweist und/oder
- die Antriebseinrichtung (2) eine Steuerungseinrichtung (13) für den Übertragungsabschnitt (9) aufweist, die für die Vorzugsdrehrichtung (10) eine höhere Anzahl von wählbaren Betriebsmodi aufweist als für die andere der Drehrichtungen und/oder
- die Antriebseinrichtung (2) eine Belüftungseinrichtung (14) aufweist, die bei der Vorzugsdrehrichtung (10) eine höhere Kühleffizienz als bei der anderen der Drehrichtungen aufweist.

12. Fahrzeug (1), umfassend eine Antriebseinrichtung (2) nach Anspruch 10 oder 11, die dazu eingerichtet ist, das Fahrzeug (1) anzutreiben.
